# EUROPÄISCHE PATENTSCHRIFT

(11) **EP 0 986 457 B1**
(45) Veröffentlichungstag und Bekanntmachung des Hinweises auf die Patenterteilung: **07.05.2003**
(21) Anmeldenummer: 99916785.1
(22) Anmeldetag: 13.03.1999
(51) Int. Cl.: B29C 63/16

(54) **VORRICHTUNG ZUM ANBRINGEN EINER FOLIE, INSBESONDERE AKUSTISCH WIRKSAMEN FOLIE**
DEVICE FOR MOUNTING A FILM, ESPECIALLY AN ACOUSTICALLY EFFECTIVE FILM
DISPOSITIF POUR APPLIQUER UNE PELLICULE, NOTAMMENT UNE PELLICULE A EFFET ACOUSTIQUE

(30) Priorität: 20.03.1998 DE 19812402
(43) Veröffentlichungstag der Anmeldung: 22.03.2000
(73) Patentinhaber: CWW-GERKO Akustik GmbH, 67547 Worms (DE)
(72) Erfinder: PETILLON, Alain, D-67547 Worms (DE)
(74) Vertreter: Schlagwein, Udo, Dipl.-Ing.
(86) Internationale Anmeldenummer: DE9900685
(87) Internationale Veröffentlichungsnummer: WO99048673

(56) Entgegenhaltungen:
- EP-A- 0 038 922
- EP-A- 0 233 700
- EP-A- 0 339 275
- WO-A-91/01873
- DE-A- 4 310 302
- DE-C- 19 616 670
- PATENT ABSTRACTS OF JAPAN vol. 018, no. 083 (M-1558), 10. Februar 1994 (1994-02-10) & JP 05 293895 A (DAINIPPON PRINTING CO LTD), 9. November 1993 (1993-11-09) & JP 05 293895 A (DAINIPPON PRINTING ) 9. November 1993 (1993-11-09)
- PATENT ABSTRACTS OF JAPAN vol. 007, no. 149 (M-225), 30. Juni 1983 (1983-06-30) & JP 58 059024 A (ARUBATSUKU SEIMAKU KK), 7. April 1983 (1983-04-07) & JP 58 059024 A (ARUBATSUKU SEIMAKU KK) 7. April 1983 (1983-04-07)

## Beschreibung

Die Erfindung betrifft eine Vorrichtung zum Anbringen einer Folie auf ein Bauteil, welche einen von einem geschlossenen Rahmen eingefasste, flexible Membran zum Halten der Folie an ihrer dem Bauteil abgewandten Seite hat und bei der zum Absaugen von zwischen der Folie und dem Bauteil vorhandener Luft Unterdruckanschlüsse vorgesehen sind.

Eine als Presse ausgebildete Vorrichtung der eingangs genannten Art zum Aufbringen einer Folie auf ein Bauteil ist in der DE 196 16 670 C1 beschrieben. Bei der in dieser Schrift beschriebenen Vorrichtung wird ein mit der Folie zu versehenes Bauteil auf einem Pressentisch befestigt. Die Folie wird anschließend auf einen Rahmen des Pressentisches gelegt, mittels einer elastischen Membran eines Pressenoberteils gegen das zu beschichtende Bauteil bewegt und durch Beaufschlagung eines Druckraumes hinter der Membran gegen das Bauteil gedrückt.

Wie die EP 0 339 275 zeigt, ist es auch bekannt, eine Folie mittels eines zu ihr hin konvex gekrümmten, elastisch verformbaren Stempels auf einen zu beschichtenden Körper aufzudrücken.

Folien als Dämpfungsschichten in Form von Bitumenfolien werden in Kraftfahrzeugen gegen die Unterseite des Fahrzeugdaches geklebt, um akustische Probleme, beispielsweise Dröhngeräusche im Kraftfahrzeug zu verhindern. Derzeit legt man die akustisch wirksame Folie auf einen Werkzeugkörper, fährt diesen mit der Folie in die richtige Position unterhalb des Daches und drückt dann von Hand durch in dem Werkzeugkörper angebrachte Fenster die Folie gegen das Dach. Dieser Arbeitsgang des Andrückens ist sehr zeitaufwendig und führt in der Praxis oftmals infolge zu geringer Druckkräfte zu einer nicht ausreichenden Verklebung der Folie, so dass relativ häufig solche Folien wieder vom Dach abfallen. Da die Krümmung der Dachfläche mit relativ groben Toleranzen behaftet ist, ließ sich bislang der Vorgang des Andrückens der Folie nur aufwendig automatisieren, weil bei automatischen Andrückvorrichtungen Maßabweichungen des mit der Folie zu versehenen Bauteils zu starken Unterschieden bei den Andrückkräften führen.

Es ist in der Praxis auch bekannt, akustisch wirksame Folien mittels eines mit Überdruck beaufschlagbaren Gummikissens gegen die Dachfläche zu drücken. Diese Applikationsweise hat jedoch den Nachteil, dass die Dachfläche an der der Folie gegenüberliegenden Seite abgestützt werden muss, damit sie sich nicht verformt. Deshalb verlangt eine solche Art der Anbringung von Folien relativ hohen Aufwand bei den Fertigungsanlagen.

Der Erfindung liegt das Problem zugrunde, eine Vorrichtung der eingangs genannten Art so zu gestalten, dass sich auch auf unterschiedlich gekrümmten und mit groben Toleranzen behafteten Bauteilen Folien mit stets gleicher und über die Fläche der jeweiligen Folie gleichmäßigen Andrückkräften anbringen lassen.

Dieses Problem wird erfindungsgemäß dadurch gelöst, dass der Rahmen an seiner vorderen, bei Benutzung der Vorrichtung dem Bauteil zugewandten Seite eine umlaufende, elastische Dichtung aufweist und dass die Unterdruckanschlüsse in dem Rahmen vor der Membran auf der dem Bauteil zugewandten Seite vorgesehen sind.

Mit einer solchen Vorrichtung lässt sich auch eine großflächige Folie gegen ein ungleichförmig verlaufendes, toleranzbehaftetes Bauteil mit sehr genauer und über die Fläche der Folie gleichmäßiger Andrückkraft auf das Bauteil anbringen. Da das Andrücken durch Erzeugen von Unterdruck auf der dem Bauteil zugewandten Seite der Membran erfolgt, wird zuverlässig vermieden, dass es beim Andrücken zu Lufteinschlüssen und damit zu einer nicht ausreichenden Verklebung der Folie kommt. Insgesamt ist die erfindungsgemäße Vorrichtung sehr einfach aufgebaut, hat ein geringes Gewicht und beansprucht wenig Platz, so dass man mit ihr auch bei ungünstigen Platzverhältnissen zurecht kommt und ein Einfahren beispielsweise in eine Karosse mittels eines Roboters ohne Schwierigkeiten möglich wird. Als Folien kommen akustisch wirksame Folien, aber auch Versteifungsfolien, Wärmedämmfolien und kombinierte Systeme in Frage. Da die erfindungsgemäße Vorrichtung mit Unterdruck arbeitet, herrscht an der der Folie gegenüberliegenden Seite des Bauteils stets der gleiche Druck wie an der Seite der Folie, so dass kein Gegendruck erzeugt werden muss. Die erfindungsgemäße Vorrichtung arbeitet vielmehr kraftneutral. Sie eignet sich auch für Bauteile, welche zum Beispiel Sicken aufweisen, weil durch den Unterdruck Lufteinschlüsse vermieden werden. Ein weiterer Vorteil liegt darin, dass die Folien als ebene Bauteile angeliefert werden können und erst mit der erfindungsgemäßen Vorrichtung bei der Anbringung in ihre der Kontur des Bauteils entsprechende Form gebracht werden müssen.

Wie bei akustisch wirksamen Folien üblich, können diese auch bei Verwendung der erfindungsgemäßen Vorrichtung selbstklebend sein, so dass vor dem Verkleben eine Abdeckfolie entfernt werden muss. Möglich ist es jedoch auch, einen drucksensiven Kleber oder feuchtigkeitshärtenden Kleber zu verwenden oder bei einem Heißkleber vor dem Verkleben die Klebeschicht durch ein Heizfeld zu erwärmen und dadurch zu aktivieren.

Besonders zuverlässig werden Lufteinschlüsse zwischen dem Bauteil und der Folie vermieden, wenn gemäß einer vorteilhaften Weiterbildung der Erfindung die Membran in ihrer nicht vom Unterdruck beeinflussten Ruhestellung zur Seite des Bauteils hin konvex gekrümmt verläuft. Hierdurch kann man erreichen, dass die Folie beim Ankleben zunächst in einem mittleren Bereich Kontakt mit dem Bauteil erhält und sich dann gleichmäßig von innen nach außen gegen das Bauteil legt.

Besonders vorteilhaft ist es, wenn gemäß einer anderen Weiterbildung der Neuerung die Membran in Ruhestellung auf der dem Bauteil abgewandten Seite gegen eine zur Seite des Bauteils hin konvex gekrümmte Auflage aufliegt und der Abstand der Membran mit der darauf aufliegenden Folie von der Vorderkante der Dichtung des Rahmens so bemessen ist, dass die Folie zunächst ausschließlich in der Flächenmitte Kontakt mit dem Bauteil hat, wenn der Rahmen mit seiner Dichtung dichtend gegen das Bauteil anliegt. Eine solche Auflage ermöglicht es, sich unterschiedlich dicken Folien anzupassen, indem jeweils eine Auflage mit angepasster Dicke verwendet wird.

Die Auflage kann Toleranzen bei dem mit der Folie zu versehenen Bauteil durch elastische Verformung ausgleichen, wenn die Auflage aus einem elastischen Schaumstoff besteht.

Konstruktiv besonders einfach ist die Vorrichtung gestaltet und ermöglicht eine zuverlässige Evakuierung, wenn der Rahmen nahe seiner umlaufenden Dichtung einen mit dem Unterdruckanschluss verbundenen, umlaufenden Ringkanal aufweist und wenn von diesen Ringkanal über den Umfang des Rahmens verteilt mehrere Unterdrucköffnungen in den Raum zwischen der Membran und dem Bauteil führen.

Die Erfindung lässt zahlreiche Ausführungsformen zu. Zur weiteren Verdeutlichung ihres Grundprinzips ist eine davon schematisch in der Zeichnung dargestellt und wird nachfolgend beschrieben. Diese zeigt in
- Fig.1: einen Schnitt durch die Vorrichtung in einer Position vor einem Bauteil,
- Fig.2: einen der Fig.1 entsprechenden Schnitt durch die gegen das Bauteil anliegende Vorrichtung bei vollständig angedrückter Folie.

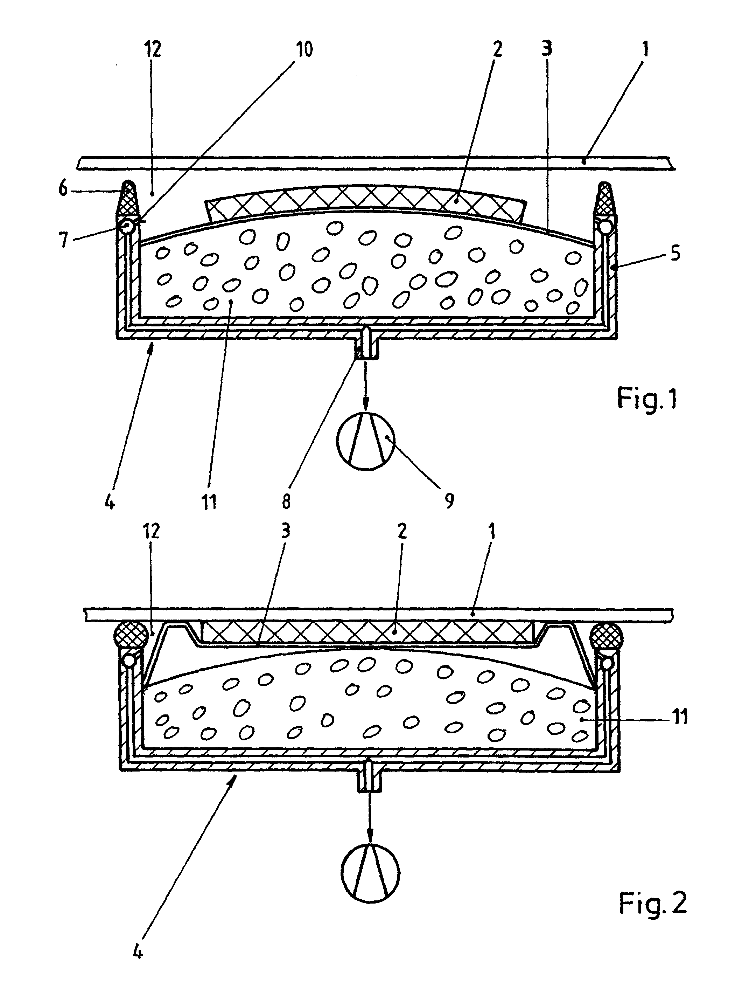

Die Figur 1 zeigt ein Bauteil 1, bei dem es sich beispielsweise um ein Karosserieblech handeln kann. Gegen dieses Bauteil 1 soll von unten her eine akustisch wirksame Folie 2, beispielsweise eine bituminöse Folie, geklebt werden. Hierzu wurde die Folie 2 auf eine flexible Membran 3 einer Vorrichtung 4 positioniert. Diese Membran 3 wird von einem Rahmen 5 allseitig eingefasst, der auf seiner dem Bauteil 1 zugewandten Stirnseite mit einer umlaufenden Dichtung 6 versehen ist.

Nahe dieser Dichtung 6 verläuft im Rahmen 5 ein Ringkanal 7, der mit einem Unterdruckanschluss 8 Verbindung hat. An diesem Unterdruckanschluss 8 ist eine Unterdruckquelle 9 angeschlossen. Vom Ringkanal 7 führen mehrere Unterdrucköffnungen 10 zur Innenseite des Rahmens 5.

Ebenfalls zu erkennen ist in Figur 1 eine Auflage 11 aus einem elastischen Schaumstoff. Diese Auflage 11 ist auf der dem Bauteil 1 zugewandten Seite konvex gekrümmt. Gegen diese konvex gekrümmte Fläche liegt die Membran 3 an, so dass sie ebenfalls zu dem Bauteil 1 hin konvex gekrümmt verläuft.

Bewegt man die Vorrichtung 4 gegen das Bauteil 1, dann bekommt die Dichtung 6 mit dem Bauteil 1 Kontakt. Dadurch wird ein Raum 12 von der Atmosphäre abgeschlossen. Die Folie 2 berührt zunächst nur im mittleren Bereich das Bauteil 1.

Wenn man nun mittels der Unterdruckquelle 9 den Raum 12 evakuiert, dann drückt von der entgegengesetzten Seite her die Luft die Membran 3 mit der Folie 2 gegen das Bauteil 1. In der in Figur 2 gezeigten Endstellung wurde die Folie 2 vollständig gegen das Bauteil 1 gedrückt, wobei sich die Membran 3 faltenbalgartig verformte.

### Bezugszeichenliste

- 1: Bauteil
- 2: Folie
- 3: Membran
- 4: Vorrichtung
- 5: Rahmen

- 6: Dichtung
- 7: Ringkanal
- 8: Unterdruckanschluss
- 9: Unterdruckquelle
- 10: Unterdrucköffnung

- 11: Auflage
- 12: Raum

## Patentansprüche

1. Vorrichtung zum Anbringen einer Folie (2) auf ein Bauteil (1), welche eine von einem geschlossenen Rahmen (5) eingefasste, flexible Membran (3) zum Halten der Folie (2) an ihrer dem Bauteil (1) abgewandten Seite hat und bei der zum Absaugen von zwischen der Folie (2) und dem Bauteil (1) vorhandener Luft Unterdrucköffnungen (10) vorgesehen sind, **dadurch gekennzeichnet, dass** der Rahmen (5) an seiner vorderen, bei Benutzung der Vorrichtung (4) dem Bauteil (1) zugewandten Seite eine umlaufende, elastische Dichtung (6) aufweist und dass die Unterdrucköffnungen (10) in dem Rahmen (5) vor der Membran (3) auf der dem Bauteil (1) zugewandten Seite vorgesehen sind.

2. Vorrichtung nach Anspruch 1, **dadurch gekennzeichnet, dass** die Membran (3) in ihrer nicht vom Unterdruck beeinflussten Ruhestellung zur Seite des Bauteils (1) hin konvex gekrümmt verläuft.

3. Vorrichtung nach Anspruch 2, **dadurch gekennzeichnet, dass** die Membran (3) in Ruhestellung auf der dem Bauteil (1) abgewandten Seite gegen eine zur Seite des Bauteils (1) hin konvex gekrümmte Auflage (11) aufliegt und der Abstand der Membran (3) mit der darauf aufliegenden Folie (2) von der Vorderkante der Dichtung (6) des Rahmens (5) so bemessen ist, dass die Folie (2) zunächst ausschließlich in der Flächenmitte Kontakt mit dem Bauteil (1) hat, wenn der Rahmen (5) mit seiner Dichtung (6) dichtend gegen das Bauteil (1) anliegt.

4. Vorrichtung nach Anspruch 3, **dadurch gekennzeichnet, dass** die Auflage (11) aus einem elastischen Schaumstoff besteht.

5. Vorrichtung nach zumindest einem der vorangehenden Ansprüche, **dadurch gekennzeichnet, dass** der Rahmen (5) nahe seiner umlaufenden Dichtung (6) einen mit dem Unterdruckanschluss (8) verbundenen, umlaufenden Ringkanal (7) aufweist und dass von diesen Ringkanal (7) über den Umfang des Rahmens (5) verteilt mehrere Unterdrucköffnungen (10) in den Raum zwischen der Membran (3) und dem Bauteil (1) führen.

## Claims

1. Apparatus for applying a foil (2) to a component (1), which has a flexible diaphragm (3), framed by a closed frame (5), to hold the foil (2), on the side of the foil (2) facing away from the component (1), and in which suction openings (10) are provided for extracting air from between the foil (2) and the component (1), **characterized in that** the frame (5) has a peripheral elastic seal (6) on its forward side facing towards the component (1) when the apparatus (4) is in use, and **in that** the suction openings (10) in the frame (5) are provided in front of the diaphragm (3) on the side facing towards the component (1).

2. Apparatus according to Claim 1, **characterized in that** the diaphragm (3) has convex curvature on the side towards the component (1) when the diaphragm (3) is in the neutral position i.e. when not being subjected to partial vacuum.

3. Apparatus according to Claim 2, **characterized in that** the diaphragm (3) when in the neutral position rests, on the side facing away from the component (1), against a support (11) which has convex curvature on the side towards the component (1) and the distance between the diaphragm (3) with the foil (2) laid thereon and the forward edge of the seal (6) of the frame (5) is such that the foil (2) initially contacts the component (1) only at the centre of its surface when the frame (5) is placed against the component (1) by its seal (6).

4. Apparatus according to Claim 3, **characterized in that** the support (11) consists of elastic foam.

5. Apparatus according to at least one of the preceding claims, **characterized in that** the frame (5) has a peripheral ring duct (7), connected to the vacuum connection (8), close to the peripheral seal (6), and **in that** a plurality of suction openings (10) distributed around the periphery of the frame (5) lead from this ring duct (7) into the space between the diaphragm (3) and the component (1).

## Revendications

1. Dispositif pour poser une feuille (2) sur un élément de construction (1), qui comprend une membrane souple (3) entourée par un cadre (5) fermé, destinée à tenir la feuille (2) sur son côté opposé à l'élément (1), et dans lequel des ouvertures à dépression (10) sont prévues pour aspirer l'air présent entre la feuille (2) et l'élément (1), **caractérisé en ce que** le cadre (5) présente, sur son côté avant tourné vers l'élément (1) lors de l'utilisation du dispositif (4), un joint d'étanchéité (6) élastique périphérique et **en ce que** les ouvertures à dépression (10) sont prévues dans le cadre (5), devant la membrane (3) du côté tourné vers l'élément (1).

2. Dispositif selon la revendication 1, **caractérisé en ce que** la membrane (3), dans sa position de repos non influencée par la dépression, s'étend bombée de façon convexe vers la face de l'élément (1).

3. Dispositif selon la revendication 2, **caractérisé en ce que** la membrane (3) repose, en position de repos, du côté opposé à l'élément (1), contre un support (11) bombé de façon convexe vers la face de l'élément (1) et la distance entre la membrane (3) avec la feuille (2) reposant dessus et le bord avant du joint d'étanchéité (6) du cadre (5) est dimensionné de façon que la feuille (2) soit en contact avec l'élément (1) d'abord uniquement au milieu de la surface, lorsque le cadre (5) repose de manière étanche avec son joint d'étanchéité (6) contre l'élément (1).

4. Dispositif selon la revendication 3, **caractérisé en ce que** le support (11) est réalisé dans un produit alvéolaire élastique.

5. Dispositif selon au moins l'une des revendications précédentes, **caractérisé en ce que** le cadre (5) présente, à proximité de son joint d'étanchéité (6) périphérique, un canal annulaire (7) périphérique, relié avec le raccord à dépression (8), et **en ce que** plusieurs ouvertures à dépression (10) réparties sur la périphérie du cadre (5) conduisent de ce canal annulaire (7) à l'espace compris entre la membrane (3) et l'élément (1).
